Europäisches Patentamt

European Patent Office

Office européen des brevets

(19)

(11) Veröffentlichungsnummer: **0 221 450 B1**

(12) **EUROPÄISCHE PATENTSCHRIFT**

(45) Veröffentlichungstag der Patentschrift: **18.12.91**

(21) Anmeldenummer: **86114661.1**

(22) Anmeldetag: **22.10.86**

(51) Int. Cl.⁵: **H01G 4/32**, H01G 13/00

(54) **Verfahren zur Herstellung eines elektrischen Kondensators mit langer Lebensdauer.**

(30) Priorität: **31.10.85 DE 3538701**

(43) Veröffentlichungstag der Anmeldung:
**13.05.87 Patentblatt 87/20**

(45) Bekanntmachung des Hinweises auf die
Patenterteilung:
**18.12.91 Patentblatt 91/51**

(84) Benannte Vertragsstaaten:
**BE DE FR GB IT SE**

(56) Entgegenhaltungen:
**EP-A- 0 008 623**
**US-A- 3 721 586**

**THE 25th ELECTRONIC COMPONENTS CON-
FERENCE, Washington, DC, 12.-14. Mai 1975,
Seiten 368-372; D.H. LOESCHER et al.: "How
heat treatment affects film foil capacitors"**

(73) Patentinhaber: **HOECHST AKTIENGESELL-
SCHAFT**
**Postfach 80 03 20**
**W-6230 Frankfurt am Main 80(DE)**

(72) Erfinder: **Helf, Karl-Eduard**
**Welschstrasse 24**
**W-6200 Wiesbaden(DE)**
Erfinder: **Crass, Günther**
**Bachstrasse 7**
**W-6204 Taunusstein 4(DE)**

## Beschreibung

Die vorliegende Erfindung betrifft ein Verfahren zur Herstellung eines gewickelten elektrischen Kondensators mit langer Lebensdauer, umfassend den elektrischen Strom leitende metallene Schichten sowie zwischen diesen angeordnet den elektrischen Strom nicht leitende dielektrische Schichten aus thermoplastischem Kunststoff.

Aus zahlreichen Druckschriften ist es bereits bekannt, gewickelte elektrische Kondensatoren, umfassend Metallschichten und zwischen diesen dielektrische Schichten, beispielsweise aus Polypropylen und gegebenenfalls weiteren Polymeren, herzustellen. Stellvertretend für alle diese Druckschriften sei auf die EP-B-0 001 525 verwiesen. Aus Platzgründen ist man dazu übergegangen, die Dicke der Metallschichten dadurch erheblich zu verringern, daß die Metalle als hauchfeine Überzüge direkt auf die Dielektrikumsschicht aus thermoplastischem Kunststoff im Vakuum abgelagert wurden. Dadurch konnten die mit solchen metallisierten Dielektrikumsfolien hergestellten Kondensatoren in ihrer Dimension erheblich verkleinert werden.

Es hat sich aber gezeigt, daß gerade bei Kondensatoren mit den durch Aufdampfung erzeugten extrem dünnen Metallschichten, insbesondere beim Einsatz für Wechselspannungen über längere Zeitdauer, äußerst unerwünschte Kapazitätsverluste festgestellt wurden. Diese Kapazitätsverluste sind die Folge lokaler Zerstörungen der Metallschicht, hervorgerufen durch elektrochemische Korrosion, wobei sich das die Metallschicht bildende metallische leitfähige Aluminium in nicht leitfähiges, polykristallines Aluminiumoxid umwandelt. Mit der Verringerung der zur Verfügung stehenden Metallfläche verringert sich auch die Kapazität des Kondensators.

Die Erscheinung ist beobachtbar an zahlreichen, nahezu kreisrunden metallfreien Stellen innerhalb der Metallschicht, deren Häufigkeit und Wachstumsrate unter anderem von der Höhe der Betriebsspannung des Kondensators, von der Frequenz des Wechselstroms und von der Betriebstemperatur des Kondensators abhängen. Aus einer Untersuchung von Taylor, publiziert in "IEEE Transactions on Electrical Insulation", Vol. EI-19, No. 4, August 1984, ist bekannt, daß die Korrosion von Aluminium in metallisierten Folienkondensatoren auf jeden Fall mit der Anwesenheit von Wasser oder Feuchtigkeit zwischen oder in den Wickellagen der untersuchten Kondensatoren zusammenhängt.

Es stellt sich somit die Aufgabe, ein Verfahren zur Herstellung eines elektrischen Kondensators in gewickelter Form bereitzustellen, mit dem gewährleistet ist, daß keine noch so geringe Wasserfeuchtigkeit im Inneren des Kondensatorwickels verbleibt, und mit diesem Verfahren einen Kondensator zu schaffen, der gegenüber bislang bekannten Kondensatoren eine geringere Tendenz zu einer irreversiblen Kapazitätsverringerung zeigt und der deshalb eine längere Lebenserwartung hat.

Gelöst wird diese Aufgabe durch ein Verfahren der eingangs genannten Gattung, das durch die folgende Merkmalskombination gekennzeichnet ist:

i) Nach dem Aufwickeln der einzelnen den Kondensator bildenden Schichten wird die in die oder zwischen den Schichten eingelagerte Feuchtigkeit durch elektrochemische Zersetzung in die Elemente Wasserstoff und Sauerstoff gespalten,

ii) die Spaltprodukte Wasserstoff und Sauerstoff werden durch das Anlegen von Unterdruck aus dem Kondensatorwickel entfernt, und

iii) mindestens eine Oberfläche der den elektrischen Strom nicht leitenden dielektrischen Schicht weist eine Oberflächenrauhigkeit $R_z$, bestimmt nach DIN 4768, von höchstens 0,25 µm auf.

Als dielektrische Schichten können im Rahmen des erfindungsgemäßen Verfahrens Folien aus verschiedenen thermoplastischen Kunststoffen verwendet werden, vorausgesetzt sie weisen zufriedenstellende Elektroisoliereigenschaften auf. Als thermoplastische Kunststoffe können Polyolefine, Polyester, Polystyrole, Polyamide und Polyvinylchlorid eingesetzt werden, bevorzugt sind Polyolefine wie Polyethylen oder Polypropylen und Polyester wie Polyethylenterephthalat. Als besonders bevorzugtes Polymeres wird ein isotaktisches Propylenhomopolymeres eingesetzt oder ein Copolymeres, das zum überwiegenden Anteil aus Propyleneinheiten zusammengesetzt ist. Solche Polymeren besitzen üblicherweise einen Schmelzpunkt von mindestens 140° C, bevorzugt von 150° C. Isotaktisches Polypropylen ohne Zuschlagstoffe mit einem n-heptanlöslichen Anteil von weniger als 10 Gew.-%, Copolymere von Ethylen und Propylen mit einem Ethylengehalt von weniger als 10 Gew.-% und Copolymere von Propylen mit anderen Alphaolefinen mit 4 bis 8 Kohlenstoffatomen und mit einem Gehalt dieser Alphaolefine von weniger als 10 Gew.-% stellen typische Beispiele für die bevorzugten thermoplastischen Polymeren dar.

Die bevorzugten thermoplastischen Polymeren haben zweckmäßigerweise einen Schmelzflußindex im Bereich von 0,5 g/10 min bis 8 g/10 min bei 230° C und 2,16 kp Belastung (DIN 53 735), insbesondere von 1,5 g/10 min bis 4 g/10 min.

Die Folien aus den genannten Polymeren sind bevorzugt zur Verbesserung ihrer mechanischen Eigenschaften mono-oder biaxial streckorientiert. Um eine genügend große Dimensionsstabilität der Folien zu gewährleisten, können die Folien insbesondere auch hitzefixiert sein. Die dielektrischen Schichten sollen möglichst dünn sein, deshalb liegt ihre Schichtdicke im Bereich von 3 bis 30 $\mu$m, bevorzugt von 5 bis 20 $\mu$m.

Die Metallschicht kann aus jedem geeigneten Metall bestehen. Bevorzugt sind Schichten aus Aluminium, Zink, Nickel, Gold oder Silber oder aus entsprechenden Legierungen, wobei Aluminium oder aluminiumhaltige Legierungen besonders bevorzugt sind. Als geeignete Metallisierungsverfahren seien die Elektroplattierung, das Besputtern und die Vakuumbedampfung genannt, wobei die Vakuumbedampfung bevorzugt ist. Um eine besonders gute Haftung der Metallschicht auf der zu metallisierenden Fläche zu erreichen, wird diese Fläche vorher einer Koronabehandlung unterworfen, d.h. durch Anlegen einer Wechselspannung von etwa 10.000 V und 10.000 Hz einer Koronaentladung ausgesetzt.

Die Dicke der Metallschicht beträgt etwa 20 bis 600 nm, vorzugsweise 25 bis 100 nm.

Das Entfernen der in dem Kondensatorwickel eingelagerten Feuchtigkeit geschieht nach dem erfindungsgemäßen Verfahren bevorzugt durch elektrochemische Zersetzung mittels Gleichstrom. Hierzu wird eine Gleichspannung von 100 bis 800 V, insbesondere von 300 bis 600 V, an die beiden Kondensatorelektroden angelegt und über einen Zeitraum von 1 bis 500 min, bevorzugt von 10 bis 100 min, aufrechterhalten.

Die bei der elektrochemischen Zersetzung der Restfeuchtigkeit entstehenden Spaltprodukte Wasserstoff und Sauerstoff werden nach dem erfindungsgemäßen Verfahren durch das Anlegen eines Unterdrucks (Vakuum) entfernt. Es hat sich in der Praxis gezeigt, daß hierfür ein Unterdruck im Bereich von 0,1 bis 0,0001 mbar und insbesondere von 0,01 bis 0,0001 mbar am besten geeignet ist.

Für das erfindungsgemäße Verfahren ist es wesentlich, daß die Oberflächenrauhigkeit der dielektrischen Schicht $R_z$, bestimmt nach DIN 4768, auf der Seite der dielektrischen Schicht, auf der die Metallschicht aufgebracht ist, den Wert von 0,25 $\mu$m nicht übersteigt, bevorzugt soll die Oberflächenrauhigkeit $R_z$ zwischen 0,1 und 0,25 $\mu$m liegen. Die Einstellung der Oberflächenrauhigkeit z.B. bei Polypropylen geschieht normalerweise bei der Herstellung der Folien durch die gezielte thermische Beeinflussung der Morphologie ($\beta$-$\alpha$-Kristallit-Umwandlung) des Polypropylens. Geeignete Verfahren hierzu sind beispielsweise in den DE-PSen 27 40 237 und 29 42 298 beschrieben.

Das im vorstehenden in allen Einzelheiten beschriebene Verfahren soll nachfolgend durch Beispiele noch näher erläutert werden. Für die Beispiele wurden Wickelkondensatoren enthaltend dielektrische Schichten aus Polypropylen und Metallschichten aus Aluminium hergestellt. Das Polypropylen hatte einen n-heptanlöslichen Anteil von 5,5 Gew.-% und einen Schmelzflußindex von 1,8 g/10 min bei 230°C und 2,16 kp Belastung. Die dielektrischen Schichten hatten eine Dicke von 8 $\mu$m und waren mit Aluminium im Hochvakuum bedampft.

Die Kapazität aller hergestellten Kondensatoren betrug zu Anfang genau 8 $\mu$F. Alle Kondensatoren wurden bei einer Temperatur von 85°C mit Wechselspannung von 440 V über einen Zeitraum von 500 h belastet, dann wurden die Kapazitätsverluste gemessen.

Beispiel 1

Es wurde eine Polypropylenfolie mit einer beidseitigen Oberflächenrauhigkeit $R_z$ von 0,20 $\mu$m als dielektrische Schicht eingesetzt. Aus dem gewickelten Kondensator wurde die Restfeuchtigkeit durch Anlegen einer Gleichspannung von 400 V über einen Zeitraum von 40 min bei einem Unterdruck von $10^{-2}$ mbar entfernt. Die Ergebnisse der Kapazitätsmessungen sind in der Tabelle am Ende der Beschreibung zusammengefaßt.

Vergleichsbeispiele

V1.) Es wurde eine Polypropylenfolie mit einer beidseitigen Oberflächenrauhigkeit $R_z$ von 0,40 $\mu$m als dielektrische Schicht eingesetzt, die Feuchtigkeit wurde nicht entfernt.

V2.) Es wurde eine Polypropylenfolie mit einer beidseitigen Oberfächenrauhigkeit $R_z$ von 0,20 $\mu$m als dielektrische Schicht eingesetzt, die Feuchtigkeit wurde nicht entfernt.

V3.) Es wurde eine Polypropylenfolie mit einer Oberflächenrauhigkeit $R_z$ wie in V1.) als dielektrische Schicht eingesetzt, die Feuchtigkeit wurde durch Anlegen eines Vakuums ($10^{-2}$ mbar) über 40 min entfernt.

V4.) Es wurde eine Polypropylenfolie mit einer Oberflächenrauhigkeit $R_z$ wie in V2.) als dielektrische Schicht eingesetzt, die Feuchtigkeit wurde durch Anlegen eines Vakuums ($10^{-2}$ mbar) über 40 min entfernt.

V5.) Es wurde eine Polypropylenfolie mit einer Oberflächenrauhigkeit $R_z$ wie in V1.) als dielektrische Schicht eingesetzt, die Feuchtigkeit wurde durch Anlegen einer Gleichspannung von 400 V über einen Zeitraum von 40 min bei einem Unterdruck von $10^{-2}$ mbar entfernt.

TABELLE

| Foliendicke 8 $\mu$m Kapazität 8 $\mu$F | Kapazitätsverluste (%) nach 500 h, bei 85° C, 440 V-Belastung |
|---|---|
| V1.) rauhe Folie $R_z$ = 0,40 $\mu$m | 7 |
| V2.) glatte Foiie $R_z$ = 0,20 $\mu$m | 4 |
| V3.) rauhe Folie wie V1.), evakuiert | 6 |
| V4.) glatte Folie wie V2.), evakuiert | 4 |
| V5.) rauhe Folie wie V1.), elektrische Wasserentfernung unter Vakuum | 3 |
| Beispiel 1 glatte Folie wie V2.), elektrische Wasserentfernung unter Vakuum | 1 |

Die Beispiele zeigen deutlich, daß die nach dem erfindungsgemäßen Verfahren hergestellten Kondensatoren verbesserte Lebenserwartungen gegenüber Kondensatoren aufweisen, die nicht nach dem erfindungsgemäßen Verfahren hergestellt sind.

**Patentansprüche**

1. Verfahren zur Herstellung eines gewickelten elektrischen Kondensators mit langer Lebensdauer, umfassend den elektrischen Strom leitende metallene Schichten sowie zwischen diesen angeordnet den elektrischen Strom nicht leitende dielektrische Schichten aus thermoplastischem Kunststoff, dadurch gekennzeichnet, daß
   i) nach dem Aufwickeln der einzelnen den Kondensator bildenden Schichten die in die oder zwischen den Schichten eingelagerte Feuchtigkeit durch elektrochemische Zersetzung in die Elemente Wasserstoff und Sauerstoff gespalten wird,
   ii) die Spaltprodukte Wasserstoff und Sauerstoff durch das Anlegen von Unterdruck aus dem Kondensatorwickel entfernt werden und
   iii) mindestens eine Oberfläche der den elektrischen Strom nicht leitenden dielektrischen Schicht eine Oberflächenrauhigkeit $R_z$, bestimmt nach DIN 4768, von höchstens 0,25 $\mu$m aufweist.

2. Verfahren nach Anspruch 1, dadurch gekennzeichnet, daß zur elektrochemischen Zersetzung der Feuchtigkeit eine Gleichspannung im Bereich von 100 bis 800 V, bevorzugt von 300 bis 600 V, an die Kondensatorelektroden angelegt wird.

3. Verfahren nach Anspruch 1 oder 2, dadurch gekennzeichnet, daß die Gleichspannung über einen Zeitraum von 1 bis 500 min, bevorzugt von 10 bis 100 min, aufrechterhalten wird.

4. Verfahren nach einem der Ansprüche 1 bis 3, dadurch gekennzeichnet, daß zur Entfernung der Spaltprodukte Wasserstoff und Sauerstoff ein Unterdruck im Bereich von $10^{-1}$ bis $10^{-4}$ mbar angelegt wird.

5. Verfahren nach einem der Ansprüche 1 bis 4, dadurch gekennzeichnet, daß als dielektrische Schicht eine Polypropylenfolie mit einer Schichtdicke im Bereich von 3 bis 30 $\mu$m, bevorzugt im Bereich von 5 bis 20 $\mu$m, eingesetzt wird.

6. Verfahren nach einem der Ansprüche 1 bis 5, dadurch gekennzeichnet, daß die Polypropylenfolie auf der Oberfläche, die eine Oberflächenrauhigkeit $R_z$ von höchstens 0.25 $\mu$m aufweist, eine durch Vakuumaufdampfung erzeugte Aluminiumschicht trägt.

7. Verfahren nach einem der Ansprüche 1 bis 6, dadurch gekennzeichnet, daß die Schichtdicke der aufgedampften Aluminiumschicht im Bereich von 20 bis 600 nm, bevorzugt von 25 bis 100 nm, liegt.

8. Verfahren nach einem der Ansprüche 1 bis 7, dadurch gekennzeichnet, daß die Oberflächenrauhigkeit $R_z$ der Polypropylenfolie im Bereich von 0,1 bis 0,25 $\mu$m liegt.

9. Verfahren nach einem der Ansprüche 1 bis 4, dadurch gekennzeichnet, daß als dielektrische Schicht eine Polyethylenterephthalatfolie mit einer Schichtdicke im Bereich von 2 bis 25 $\mu$m, bevorzugt von 3 bis 15 $\mu$m, die auf der Oberfläche, die eine Oberflächenrauhigkeit $R_z$ von höchstens 0.25 $\mu$m aufweist, eine durch Vakuumaufdampfung erzeugte Aluminiumschicht mit einer Schichtdicke von 20 bis 600 nm trägt, eingesetzt wird.

10. Verfahren nach Anspruch 9, dadurch gekennzeichnet, daß die Oberflächenrauhigkeit $R_z$ der Polyethylenterephthalatfolie im Bereich von 0,1 bis 1 $\mu$m liegt.

**Claims**

1. A method for manufacturing a wound electrical capacitor with long service life comprising metallic layers conducting the electrical current and also, disposed between the latter, dielectric layers of thermoplastic plastic material which do not conduct the electrical current, wherein

i) after the individual layers forming the capacitor have been rolled up, the moisture deposited in or between the layers is broken down by electrochemical decomposition into the elements hydrogen and oxygen,

ii) the broken-down hydrogen and oxygen are removed from the wound capacitor by applying a reduced pressure, and

iii) at least one surface of the dielectric layer which does not conduct the electrical current has a surface roughness Rz, determined in accordance with DIN 4768, of at least 0.25 $\mu$m.

2. The method as claimed in claim 1, wherein a DC voltage in the range from 100 to 800 V, preferably from 300 to 600 V is applied to the capacitor electrodes for the electrochemical decomposition of the moisture.

3. The method as claimed in claim 1 or 2, wherein the DC voltage is maintained over a period of 1 to 500 min, preferably from 10 to 100 min.

4. The method as claimed in any one of the claims 1 to 3, wherein reduced pressure in the range from $10^{-1}$ to $10^{-4}$ mbar is applied to remove the break-down products of hydrogen and oxygen.

5. The method as claimed in any one of the claims 1 to 4, wherein a polypropylene film with a layer thickness in the range from 3 to 30 $\mu$m, preferably in the range from 5 to 20 $\mu$m, is used as dielectric layer.

6. The method as claimed in any one of the claims 1 to 5, wherein the polypropylene film carries an aluminum layer produced by vacuum deposition on the surface having a surface roughness $R_z$ of not more than 0.25 $\mu$m.

7. The method as claimed in any one of the claims 1 to 6, wherein the layer thickness of the vapor-deposited aluminum layer is in the range from 20 to 600 nm, preferably from 25 to 100 nm.

8. The method as claimed in any one of the claims 1 to 7, wherein the surface roughness $R_z$ of the polypropylene film is in the range from 0.1 to 0.25 $\mu$m.

9. The method as claimed in one of the claims 1 to 4, wherein a polyethylene terephthalate film having a layer thickness in the range from 2 to 25 $\mu$m, preferably from 3 to 15 $\mu$m, which carries an aluminum layer with a layer thickness of 20 to 600 nm produced by vapor deposition in vacuum on the surface having a surface roughness $R_z$ of not more than 0.25 $\mu$m, is used as dielectric layer.

10. The method as claimed in claim 9, wherein the surface roughness $R_z$ of the polyethylene terephthalate film is in the range from 0.1 to 1 $\mu$m.

**Revendications**

1. Procédé de fabrication d'un condensateur électrique enroulé de durée de vie élevée, comprenant des couches de métal conduisant le courant électrique ainsi que des couches, disposées entre elles, de diélectrique en matière thermoplastique ne conduisant pas le courant électrique, caractérisé en ce que :
    i) après avoir enroulé les couches constituant le condensateur, l'humidité emmagasinée dans les couches ou entre elles est séparée, au moyen d'une décomposition électrochimique, en les éléments hydrogène et oxygène ;
    ii) les produits de décomposition, hydrogène et oxygène, sont retirés de l'enroulement du condensateur en appliquant une basse pression ; et
    iii) au moins une surface de la couche diélectrique ne conduisant pas le courant électrique présente une rugosité superficielle Rz, déterminée d'après DIN 4768, d'au plus 0,25 $\mu$m.

2. Procédé selon la revendication 1, caractérisé en ce que pour réaliser la décomposition électrochimique de l'humidité, une tension continue comprise entre 100 et 800 V, et de préférence entre 300 et 600 V, est appliquée aux électrodes du condensateur.

3. Procédé selon la revendication 1 ou 2, caractérisé en ce que la tension continue est maintenue pendant une durée comprise entre 1 et 500 min, et de préférence entre 10 et 100 min.

4. Procédé selon une des revendications 1 à 3, caractérisé en ce que pour éliminer les produits de la décomposition, hydrogène et oxygène, on applique une basse pression comprise entre $10^{-1}$ et $10^{-4}$ mbar.

5. Procédé selon une des revendications 1 à 4, caractérisé en ce que l'on utilise comme couche diélectrique une feuille de polypropylène avec une épaisseur dans le domaine de 5 à 20 $\mu$m.

6. Procédé selon une des revendications 1 à 5, caractérisé en ce que la feuille de polypropylène, qui présente une rugosité superficielle Rz d'au plus 0,25 $\mu$m, porte à sa surface une couche d'aluminium produite par vaporisation sous vide.

7. Procédé selon une des revendications 1 à 6, caractérisé en ce que l'épaisseur de la couche d'aluminium vaporisée sous vide est comprise entre 20 et 600 nm, et de préférence entre 25 et 100 nm.

8. Procédé selon une des revendications 1 à 7, caractérisé en ce que la rugosité superficielle Rz de la feuille de polypropylène est comprise entre 0,1 et 0,25 $\mu$m.

9. Procédé selon une des revendications 1 à 4, caractérisé en ce que l'on utilise comme couche diélectrique une feuille de téréphtalate de polyéthylène avec une épaisseur comprise entre 2 et 25 $\mu$m, et de préférence entre 3 et 15 $\mu$m, dont la surface qui présente une rugosité superficielle Rz d'au plus 0,25 $\mu$m porte une couche d'aluminium d'une épaisseur de 20 à 600 nm produite par vaporisation sous vide.

10. Procédé selon la revendication 9, caractérisé en ce que la rugosité superficielle Rz de la feuille de téréphtalate de polyéthylène est comprise entre 0,1 et 1 $\mu$m.